# EUROPÄISCHE PATENTANMELDUNG

(11) **EP 3 838 685 A1**
(43) Veröffentlichungstag der Anmeldung: **23.06.2021**
(21) Anmeldenummer: 20000464.6
(22) Anmeldetag: 11.12.2020
(51) Int. Cl.: B60R 16/023, H04L 12/40

(54) **CAN-KOMMUNIKATIONSPROTOKOLLSYSTEM ZUM AUSTAUSCH VON KRAFTSTOFFVERBRAUCH UND/ODER BETRIEBSFLÜSSIGKEITSVERBRAUCHS- UND GERÄUSCHOPTIMIERENDEN BOTSCHAFTEN ZWISCHEN AN- UND ABTRIEBSKOMPONENTEN, WELCHE GLEICHFALLS DAZU BEITRAGEN, DIE GESAMTVERFÜGBARKEIT DES SYSTEMS ZU ERHÖHEN UND VERFAHREN**

(30) Priorität: 16.12.2019 DE 102019008686; 15.10.2020 DE 102020006328
(71) Anmelder: DEUTZ Aktiengesellschaft, 51149 Köln (DE)
(72) Erfinder: GRAWITTER, Martin, 50354 Hürth (DE); WANNHOFF, Jens, 51429 Bergisch-Gladbach (DE); ELFI, Samir, 52134 Herzogenrath (DE)

(57) **Zusammenfassung**

1. CAN-Kommunikationsprotokollsystem zum Austausch von Kraftstoffverbrauch und/oder betriebsflüssigkeitsverbrauchs- und geräuschoptimierenden Botschaften zwischen An- und Abtriebskomponenten, welche gleichfalls dazu beitragen, die Gesamtverfügbarkeit des Systems zu erhöhen und Verfahren
2. Beschrieben wird ein CAN-Kommunikationsprotokollsystem für eine Brennkraftmaschine zum Austausch von Kraftstoffverbrauch und/oder betriebsflüssigkeitsverbrauchs- und geräuschoptimierenden Botschaften zwischen An- und Abtriebskomponenten, welche gleichfalls dazu beitragen, die Gesamtverfügbarkeit des Systems zu erhöhen.

## Beschreibung

Die Erfindung betrifft ein CAN-Kommunikationsprotokollsystem nebst Brennkraftmaschine und Verfahren zum Betreiben derselben zum Austausch von Kraftstoffverbrauch und/oder betriebsflüssigkeitsverbrauchs- und geräuschoptimierenden Botschaften zwischen An- und Abtriebskomponenten, welche gleichfalls dazu beitragen, die Gesamtverfügbarkeit des Systems zu erhöhen.

Derartige Systeme sind bekannt aus der DE 199 09 121 A1, in der ein Verfahren offenbart wird zum Bereitstellen einer Kommunikation zwischen Controllern unter Nutzung von weniger Kommunikationsleitungen, als bisher üblich.

In der DE 10 2008 005 712 A1 werden ein Verfahren und eine Anordnung zur Steuerung von Motoren sowie ein entsprechendes Computerprogramm samt computerlesbarem Speichermedium offenbart.

Bekannt sind z. B. die Absenkung der Betriebsdrehzahl des Antriebsmotors, die Darstellung des Verbrauchskennfeldes und der Wirkungsgrade der Komponenten in den Steuerungen (z. B. Umsetzung des (Diesel-) Motor-Verbrauchskennfeldes in der Steuerung der Hydraulikpumpen), Anlernen der Systeme im Betrieb oder durch Programmierung anhand von Messungen, spezielle Auslegung/Abstimmung von einzelnen Komponenten aufeinander.

Daran ist nachteilig, dass die beschriebenen Verfahren kompliziert und umständlich anzuwenden sind.

Nachteil von Systemen, welche die vorliegend vorgeschlagenen Botschaften nicht austauschen:
(1) messtechnischer (Zusatz-) Aufwand für die Abstimmung des Systems
(2) Notwendigkeit der Anlernung / Programmierung.

Bei jeder neuen Kombination von Komponenten müssen die Schritte 1 bis 2 wiederholt werden. Eine erneute Anlernphase/ -prozedur wird erforderlich sein nach einem Komponentenwechsel. Keine Berücksichtigung der Systemzustände (z. B. Motor und EAT (Abgasnachbehandlung) -Verbrennungsfunktion).

Aufgabe der vorliegenden Erfindung ist es, die oben genannten Nachteile abzustellen und ein System zu schaffen, das den besten Wirkungsgrad ermittelt. Ziel soll es sein, eine übergreifende Kommunikationsbasis zu schaffen, die es ermöglicht, frei wählbare Kombinationen von An- und Abtriebskomponenten miteinander zu kombinieren. Die Kommunikation muss alle für den optimierten Betrieb notwendigen Informationen austauschen, so, dass das System aus o. g. Komponenten unmittelbar betriebsbereit ist und die o. g. Nachteile entfallen (Plug and Play / Perform).

Die Aufgabe wird gelöst durch ein System und ein Verfahren gemäß den unabhängigen Ansprüchen.

An- und Abtriebskomponente stehen im permanenten Austausch von Daten, wie beispielsweise Leistungsanfrage, Gradienten, Reaktionszeiten, Stati, Drehzahlen etc., um, hieraus resultierend, jeweils den für das Einzelsystem besten Wirkungsgradpunkt zu ermitteln. Durch die Optimierung der Einzelwirkungsgrade ergibt sich auch der optimale Gesamtwirkungsgrad. Durch den Austausch von Betriebszuständen können alle Komponenten Rücksicht auf die übrigen nehmen. Basierend hierauf können Schutzfunktionen geschaltet werden, welche dem Komponentenschutz dienen. Durch Priorisierung der Stati kann Systemschutz über Verbrauchsoptimierung gestellt werden. Dies kommt der Gesamtverfügbarkeit des Systems zugute.

Die perfekte Abstimmung der Antriebskomponente mit den Abtriebskomponenten sorgt für einen merklich geringeren Diesel- und Betriebsmittelverbrauch (z. B. DEF/Ad-Blue), geringere Geräuschemission und höhere Gesamtsystemverfügbarkeit. Mittels des Informationsaustauschs ist das System aus o. g. Komponenten unmittelbar bzw. mit geringem Aufwand betriebsbereit (Plug and Play / Perform). Austausch abgesprochener und inhaltlich abgestimmter CAN-Botschaften zur Ermöglichung eines u. a. verbrauchsoptimierten Betriebs zwischen An- und Abtriebskomponenten. Berücksichtigung von z. B. innermotorischen Zuständen der Antriebskomponente als Basis für den Inhalt der ausgetauschten Botschaften.

Die vorteilhafte Abstimmung der Antriebskomponenten mit den Abtriebskomponenten sorgt für einen signifikant geringeren Diesel- und Betriebsmittelverbrauch wie beispielsweise Ad-Blue (DEF), geringere Geräuschemissionen und höhere Gesamtsystemverfügbarkeit. Mittels des Informationsaustauschs ist das System unmittelbar betriebsbereit.

Vorteilhaft beschrieben werden hier die Funktionen und die SAE J1939 Kommunikationsschnittstelle, welche den EMR4 & EMR5 Motorsteuergeräten der DEUTZ AG hinzugefügt werden, um die Funktion Dynamic Best Point Control (DBPC) realisieren zu können.

Weitere vorteilhafte Ausgestaltungen ergeben sich aus den Unteransprüchen.

Nachfolgend wird die Erfindung anhand der Zeichnungen beispielhaft erläutert, es zeigen:
- Fig. 1: Kommunikation zwischen dem Hydrauliksteuergerät und dem EMR 4 & 5 Motorsteuergerät
- Fig. 2: Kurve konstanter Leistung im Diagramm des Drehmoments über der Motordrehzahl.

SAE J1939 wird im Nutzfahrzeugbereich zur Kommunikation im Nutzfahrzeug eingesetzt, die Eigenschaften von SAE J1939 werden kurz beschrieben.

SAE J1939 verwendet CAN (Controller Area Network, ISO11998) als physikalische Schicht. Es ist eine empfohlene Praxis, die festlegt, welche und wie die Daten zwischen den elektronischen Steuergeräten (ECU) innerhalb eines Fahrzeugnetzes übermittelt werden. Typische Regler sind Motor, Bremse, Getriebe usw. Die besonderen Merkmale von J1939 sind eine Erweiterte CAN-Kennung (29 bit), eine Bitrate von 250 kbit/s, Peer-to-Peer- und Broadcast-Kommunikation, Transportprotokolle für bis zu 1785 Datenbytes, Network Management, Definition von Parametergruppen für Nutzfahrzeuge und andere, herstellerspezifische Parametergruppen werden unterstützt und Diagnosefunktionen.

Es gibt mehrere Standards, die sich von SAE J1939 ableiten. Diese Standards verwenden die grundlegenden Merkmale von SAE J1939 mit einem anderen Satz von Parametergruppen und modifizierten physikalischen Ebenen. Diese Standards sind z. B. ISO11783 für Traktoren und Maschinen für Land- und Forstwirtschaft, die die Kommunikation seriell steuern.

ISO11783 definiert die Kommunikation zwischen Traktor und Gerät auf einem Gerätebus. Es spezifiziert einige Dienste auf Anwendungsebene, wie Virtual Terminal, Tractor ECU, Task Controller und File Server. Es fügt ein erweitertes Transportprotokoll und ein Working Set Management hinzu.

NMEA2000, serielle Datenvernetzung von marinen elektronischen Geräten, es definiert Parametergruppen für die Kommunikation zwischen Meeresgeräten. Es spezifiziert das zusätzliche Fast Packet Transport Protokoll. ISO11992, der Austausch digitaler Informationen zwischen Zugfahrzeug und Anhängefahrzeug. Es definiert den Informationsaustausch zwischen Straßenfahrzeug und gezogenem Fahrzeug. Es verwendet dasselbe Parametergruppenformat wie J1939 auf einer anderen physikalischen Ebene mit 125 kbit/s.

FMS, das Flotten-Management-System. Der FMS-Standard definiert ein Gateway zwischen dem Fahrzeugnetz J1939 und einem Flotten-Management-System.

Eine Parametergruppe ist ein Satz von Parametern, die zum selben Thema gehören und die gleiche Übertragungsrate aufweisen. Die Definition der anwendungsrelevanten Parametergruppen und Parameter ist im Dokument SAE J1939-15 Reduced Physical Layer, 250K bits/sec, Un-Shielded Twisted Pair (UTP) zu finden.

Die Länge einer Parametergruppe ist nicht auf die Länge eines CAN-Rahmens beschränkt. Normalerweise hat eine Parametergruppe eine Mindestlänge von 8 Bytes bis zu 1785 Bytes. Parametergruppen mit mehr als 8 Bytes benötigen ein Transportprotokoll zur Übertragung.

Die CAN-Kennung einer J1939-Nachricht enthält Parametergruppennummer (PGN), Quelladresse, Priorität, Datenseitenbit, erweitertes Datenseitenbit und eine Zieladresse (nur für eine Peer-to-Peer-PG).

Die Kennung setzt sich wie folgt zusammen:

| | |
|---|---|
| Priorität: | 3 bit |
| Extended Data Page: | 1 bit |
| Data Page: | 1 bit |
| PDU Format: | 8 bit |
| PDU Specific: | 8 bit |
| Quelladresse: | 8 bit. |

PDU-Format 240 (peer-to-peer) enthält PDU-spezifisch die Zieladresse. Global (255) kann auch als Zieladresse verwendet werden. Dann richtet sich die Parametergruppe an alle Geräte. In diesem Fall wird die PGN nur aus dem PDU-Format gebildet. Bei PDU-Format >= 240 (Broadcast) bildet das PDU-Format zusammen mit der Gruppenerweiterung im PDU-spezifischen Feld die PGN der übermittelten Parametergruppe. Jede Parametergruppe wird über eine eindeutige Nummer angesprochen - die PGN. Für die PGN wird ein 24-Bit-Wert verwendet, der sich aus den 6 Bits zusammensetzt, die auf 0, PDU-Format (8 Bit), PDU-Specific (8 Bit), Data Page (1 Bit) und Extended Data Page (1 Bit) gesetzt sind.

Es gibt zwei Arten von Parametergruppennummern:
Globale Pgns identifizieren Parametergruppen, die an alle gesendet werden (Broadcast). Hier werden das PDU Format, PDU Specific, Data Page und Extended Data Page zur Identifikation der entsprechenden Parametergruppe verwendet. Bei globalen Pgns ist das PDU-Format 240 oder größer und das PDU-spezifische Feld ist eine Gruppenerweiterung.

Spezifische Pgns sind für Parametergruppen, die an bestimmte Geräte (peer-to-peer) gesendet werden. Hier werden das PDU-Format, die Datenseite und das Extended Data Pare zur Identifikation der entsprechenden Parametergruppe verwendet. Das PDU-Format ist 239 oder kleiner und das PDU-spezifische Feld ist auf 0 gesetzt.

Mit dieser Aufteilung der PGN sind 240 + (16 * 256) = 4336 verschiedene Parametergruppen innerhalb jeder Datenseite möglich. Mit der Übertragung einer Parametergruppe wird die PGN in der CAN-Kennung codiert.

Mit dem Data Page Bit und der Extended Data Page können Bit 4 verschiedene Datenseiten ausgewählt werden, siehe folgende Tabelle.

**Tabelle 1: Datenseiten**

| Extended Data Page Bit | Data Page Bit | Beschreibung |
|---|---|---|
| 0 | 0 | SAE J1939 Seite 0 Parametergruppen |
| 0 | 1 | SAE J1939 Seite 1 Parametergruppen (NMEA2000) |
| 1 | 0 | SAE J1939 vorbehalten |
| 1 | 1 | ISO 15765-3 definiert |

Muster einer Definition einer Parametergruppe:

| | |
|---|---|
| Bezeichnung: | Motortemperatur 1 - ET1 |
| Übertragungsrate: | 1s |
| Datenlänge: | 8 Bytes |
| Extended Data Page: | 0 |
| Datenseite: | 0 |
| PDU-Format: | 254 |
| PDU-spezifisch: | 238 |
| Default priority: | 6 |
| PG-Nummer: | 65,262 (00FEE16) |

### Beschreibung der Daten:

### Byte:

1 Motorkühlmitteltemperatur
2 Motorkraftstofftemperatur 1
3, 4 Motoröltemperatur 1
5, 6 Motorturboladeröl Temperatur
7 Motorladeluftkühler Temperatur
8 Motorladeluftkühler Thermostatöffnung.

### Nummer des fehlerverdächtigen Parameters (SPN)

Jedem Parameter einer Parametergruppe oder Komponente wird eine fehlerverdächtige Parameternummer zugeordnet. Es dient zur Diagnose der Meldung und Identifizierung von Funktionsstörungen einer Controller-Anwendung (CA).

Die SPN ist eine 19-Bit-Zahl und hat einen Bereich von 0 bis 524287. Für proprietäre Parameter ist ein Bereich von 520192 bis 524287 reserviert.

### Besondere Parametergruppen

SAE J1939-21 definiert einige Parametergruppen auf der Datenverbindungsebene.

### Gruppe von Anfrageparametern

Die Anfrageparametergruppe (RQST, PGN 00EA0016) kann an alle oder an eine bestimmte CA gesendet werden, um eine bestimmte Parametergruppe anzufordern. Die RQST enthält die PGN der Anforderungsparametergruppe. Wenn der Empfänger einer bestimmten Anfrage nicht antworten kann, muss er eine negative Bestätigung senden. Der RQST hat einen Datenlängencode von 3 Bytes und ist die einzige Parametergruppe mit einem Datenlängencode von weniger als 8 Bytes.

### Gruppe von Bestätigungsparametern

Die Bestätigungsparametergruppe (ACKM, PGN 00E80016) kann verwendet werden, um eine negative oder positive Bestätigung zu senden, d. h. als Antwort auf eine Anforderung.

### Parametergruppe, die eine Adresse beansprucht

Die Adressforderungsparametergruppe (ACL, PGN 00EE0016) wird für die Netzwerkverwaltung verwendet, siehe weiter unten.

### Parametergruppe von befohlenen Adressen

Die Adressparametergruppe (CA, PGN 00FED816) kann zur Änderung der Adresse einer CA verwendet werden.

### Parametergruppe für ein Transportprotokoll

Die Transportprotokollparametergruppen (TPCM, PGN 00EC0016 und TPDT, PGN 00EB0016) werden zur Übertragung von Parametergruppen mit mehr als 8 Datenbyte verwendet, siehe weiter unten.

### Network Management

Die Software eines elektronischen Steuergeräts (ECU) ist die Controller-Anwendung (CA). Ein ECU kann eine oder mehrere CAS enthalten. Jede CA hat eine eindeutige Adresse und einen zugehörigen Gerätenamen. Jede Nachricht, die von einer CA gesendet wird, enthält diese Quelladresse. Es gibt 255 mögliche Adressen:

| | |
|---|---|
| 0...253 | - gültige Quelladressen für CAs |
| 0...127 und 248....253 | - für CAS mit bevorzugten Adressen und definierten Funktionen |
| 128...247 | - für alle CAS verfügbar |
| 254 | - null |
| 255 | - global. |

Die meisten CAS wie Motor, Getriebe usw. haben eine bevorzugte Adresse (SAE J1939-01 Recommended Practice for Control and Communications Network for On-Highway Equipment). Bevor eine CA eine Adresse verwenden kann, muss sie sich im Bus registrieren. Dieses Verfahren heißt "Adressangabe." Dabei sendet die Vorrichtung eine "Address Claim"-Parametergruppe (ACL, PGN 00EE0016) mit der gewünschten Quelladresse. Diese PG enthält einen 64-Bit-Gerätenamen. Wird eine Adresse bereits von einer anderen CA verwendet, so hat die CA, deren Gerätename die höhere Priorität hat, die Adresse beansprucht.

Der Gerätename enthält einige Informationen über die CA und beschreibt deren Hauptfunktion. Ein Herstellercode muss vom SAE angefordert werden. Die Werte der Felder sind in SAE J1939-81 definiert (SAE J1939-31 Network Layer).

### Adress-Anspruch Verfahren

In einer gemeinsamen Situation sendet die Controller-Anwendung beim Start eine Adress-Anspruch-Parametergruppe aus und wartet eine definierte Zeitdauer ab. Wenn es einen Adresskonflikt nicht erkennt, kann es mit seiner normalen Kommunikation beginnen.

In einer Situation, in der eine andere CA die Adresse bereits nutzt, tritt ein Adresskonflikt auf. Die CA mit der höheren Priorität des Gerätenamens erhält die Adresse. Die andere CA muss eine Parametergruppe "Not Claim Address" mit Quelladresse Null (254) senden.

Es hängt von der Adressfähigkeit eines CA ab, wie zu verfahren ist, wenn eine Adresse nicht erhalten werden kann.

### Antrag auf Angabe der Anschrift

Eine CA kann andere CA im Netzwerk erkennen, indem sie die ACL-Parametergruppe anfordert. Es ist zulässig, die Null-Adresse (254) als Quelladresse zu verwenden, bevor eine CA das Adressanspruchsverfahren durchgeführt hat. Ist die Anfrage an die globale Adresse (255) gerichtet, müssen alle CAs im Netzwerk mit der ACL-Parametergruppe (einschließlich eigener CA, wenn eine Adresse bereits beansprucht wurde) antworten.

### Address Capability

SAE J1939-81 definiert die folgenden Arten der Fähigkeit, eine Adresse zu erhalten:

### Mit beliebiger Adresse fähiges CA

Die CA wählt ihre Quelladresse durch einen internen Algorithmus aus. Sie kann eine neue Adresse für einen Adresskonflikt auswählen. Das Feld Arbitrary Address Capable im Gerätenamen zeigt diese Fähigkeit an.

### CA mit einer einzigen Adresse

Eine CA dieses Typs kann nur eine Adresse verwenden. Bei Adresskonflikten kann sie keine andere Adresse auswählen. Es kann die Gruppe der befohlenen Adressparameter oder proprietäre Mechanismen unterstützen, um die Adresse zu ändern. Das Feld Arbitrary Address Capable wird für diese CAs nicht gesetzt.

### Transportprotokolle

Parametergruppen, die mehr als 8 Datenbytes enthalten, werden mittels eines Transportprotokolls übertragen.

Für die Peer-to-Peer- und Broadcast-Übertragung gibt es zwei verschiedene Protokolle. Die Transportprotokolle verwenden zwei spezielle Parametergruppen, die für die Verbindungsverwaltung (TP.CM) und die Übertragung der Daten (TP.DT) verwendet werden.

Für die Ausstrahlung wird das BAM-Protokoll (Broadcast Announce Message) verwendet. Hier sendet der Sender nach einer BAM-PG alle Daten-PG in einem Mindestintervall von 50 ms.

Mit der Peer-to-Peer-Übertragung leitet der Sender die Verbindung mit einer "Request to Send"-Nachricht ein. Der Empfänger steuert dann das Transportprotokoll mit "Senden klar" und bestätigt es schließlich mit "Nachrichtenende bestätigen".

Die diagnostischen Merkmale von SAE J1939 unterstützen folgende Dienstleistungen:
- Meldung und Identifizierung von Betriebsstörungen
- Zugriff auf den Speicher
- überwachte Prüfungen.

Eine wichtige Parametergruppe ist die Diagnosemeldung 1 (DM1, PGN FECA16). Wird sie unterstützt, muss sie von jedem CA zyklisch gesendet werden, um ihren Zustand zu melden. Die Parametergruppe enthält den Zustand für verschiedene Lampen:
- Leuchte zur Anzeige von Funktionsstörungen
- rote Stoppleuchte
- bernsteinfarbene Warnleuchte
- Lampe schützen.

Ein Gerätecluster kann mit diesen Informationen den Zustand des Systems dem Fahrer melden.

Zusätzlich enthält die Parametergruppe eine Liste mit diagnostischen Fehlercodes (DTC). Zusammen mit der Adresse eines Absenders kann der Parameter von Fehlverhalten-Komponenten identifiziert werden.

Eine DTC enthält 4 Bytes, die die SPN, die Fehlermoduskennung (FMI) und eine Ereigniszahl enthalten. Enthält die DM1 mehr als eine DTC, so ist ein Transportprotokoll zu verwenden.

Durch die Spezifikation der Parametergruppen, das CAN-Identifizierungsschema und das Netzmanagement wird eine herstellerübergreifende Zusammenarbeit von Steuergeräten gewährleistet.

J1939 beschreibt neben den hier dargestellten Mechanismen auch die physikalischen Eigenschaften und die Verwendung von Bus-Teilsegmeten.

Grundsätzlich können diese Botschaften angewendet werden, um eine Kommunikation zwischen verschiedenen An- und Abtriebskomponenten/ -konzepten zu realisieren.

Beispielhaft zu nennen sind hier Antriebskomponenten wie: Verbrennungsmotoren (Diesel-/Otto-Motoren oder anderen Prinzipen/Brennstoffe), elektrische Antriebe, hybride Antriebe.

Weiter sind Abtriebskomponenten wie z. B.: hydrostatische/dynamische, mechanische, elektrische Komponenten und Kombinationen hieraus zu nennen.

Die Nutzung der Botschaften kann gleichfalls dazu dienen, den Verbrauch weitere Betriebsflüssigkeiten wie z. B. Motoröl oder Harnstofflösung zu optimieren.

Die Botschaften können gleichfalls dazu dienen, die Verfügbarkeit des Gesamtsystems zu erhöhen und z. B. weniger Stillstands-Regenerationen erforderlich zu machen, die Folge ist weniger Verschleiß und weniger Wartung.

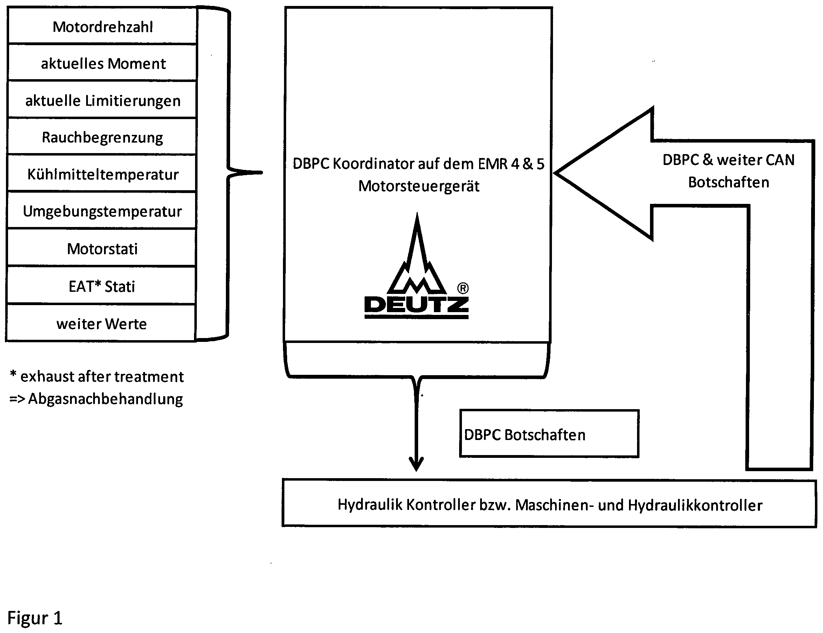

Figur 1 zeigt die Kommunikation zwischen dem Hydrauliksteuergerät und dem EMR 4 & 5 Motorsteuergerät, bei der es möglich ist, den optimalen Motorbetriebspunkt zu wählen. Die Kommunikation wird via CAN-Bus nach J1939 Standard realisiert, wie dies weiter oben detailliert beschrieben wird.

Die Kommunikation wird via CAN-Bus nach dem J1939 Standard realisiert.

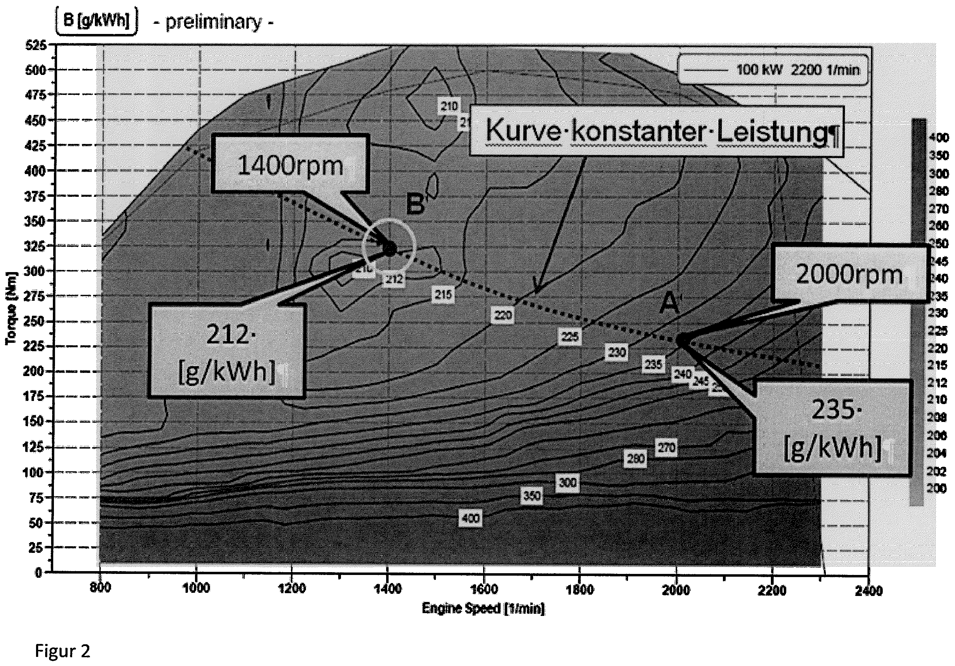

Figur 2 zeigt die Kurve konstanter Leistung im Diagramm des Drehmoments über der Motordrehzahl.

Der in der Kurve dargestellte Punkt A ist der Betriebspunkt ohne die Funktion Dynamic Best Point Control (DBPC). Der in der Kurve dargestellte Punkt B ist der Betriebspunkt, der von der Funktion Dynamic Best Point Control (DBPC) vorgeschlagen wird. Die Kraftstoffeinsparung im Beispiel von Punkt A zu Punkt B beträgt 23g/kWh. Eine Geräuschverminderung durch die geringere Motordrehzahl ist ebenfalls die Folge.

## Patentansprüche

1. CAN-Kommunikationsprotokollsystem für eine Brennkraftmaschine zum Austausch von Kraftstoffverbrauch und/oder betriebsflüssigkeitsverbrauchs- und geräuschoptimierenden Botschaften zwischen An- und Abtriebskomponenten, welche gleichfalls dazu beitragen, die Gesamtverfügbarkeit des Systems zu erhöhen.

2. Brennkraftmaschine mit einem CAN-Kommunikationsprotokollsystem zum Austausch von Kraftstoffverbrauch und/oder betriebsflüssigkeitsverbrauchs- und geräuschoptimierenden Botschaften zwischen An- und Abtriebskomponenten, welche gleichfalls dazu beitragen, die Gesamtverfügbarkeit des Systems zu erhöhen.

3. Verfahren zum Betreiben einer Brennkraftmaschine,
**dadurch gekennzeichnet, dass** eine Brennkraftmaschine nach einem oder mehreren der vorgenannten Ansprüche zum Einsatz kommt.
